(19) Europäisches Patentamt
European Patent Office
Office européen des brevets

(11) **EP 1 921 777 A1**

(12) **EUROPEAN PATENT APPLICATION**
published in accordance with Art. 153(4) EPC

(43) Date of publication:
**14.05.2008 Bulletin 2008/20**

(51) Int Cl.:
*H04H 1/00* (2008.01)   *H04N 7/173* (2006.01)
*H04N 17/04* (2006.01)

(21) Application number: **06796857.8**

(22) Date of filing: **28.08.2006**

(86) International application number:
**PCT/JP2006/316823**

(87) International publication number:
**WO 2007/029532 (15.03.2007 Gazette 2007/11)**

(84) Designated Contracting States:
**DE GB NL**

(30) Priority: **02.09.2005 JP 2005254594**

(71) Applicant: **Leader Electronics Corp.**
**Yokohama-shi, Kanagawa 223-8505 (JP)**

(72) Inventor: **TATSUMI, Hiroaki**
**c/o Leader Electronics Corp.**
**Yokohama-shi, Kanagawa, 223-8505 (JP)**

(74) Representative: **Hartz, Nikolai et al**
**Wächtershauser & Hartz**
**Weinstrasse 8**
**80333 München (DE)**

(54) **APPARATUS FOR MODIFYING PART OF BROADCASTING TS**

(57) An apparatus comprises means (31) for receiving a broadcast TS (transport stream) and detecting layer information in each broadcast TS packet, means (32) for delaying the broadcast TS, means (37) for inputting an MPEG-TS for rewriting, means (33) for generating a signal for selecting a delayed broadcast TS packet when the layer information does not indicate a predetermined layer, and generating a signal for selecting an MPEG-TS packet for rewriting when the layer information indicates the predetermined layer, and means (38) for selectively outputting the delayed broadcast TS packet and the MPEG-TS packet for rewriting. The apparatus may further comprise means (34) for modifying a PAT packet of the broadcast TS, and means (35) for modifying an NIT packet of the broadcast TS, where the apparatus can selectively output the modified PAT packet and modified NIT packet.

*Fig. 3*

**Description**

TECHNICAL FIELD

The present invention relates to an apparatus for modifying contents belonging to a predetermined layer within contents belonging to a plurality of layers included in a broadcast TS (transport stream).

BACKGROUND ART

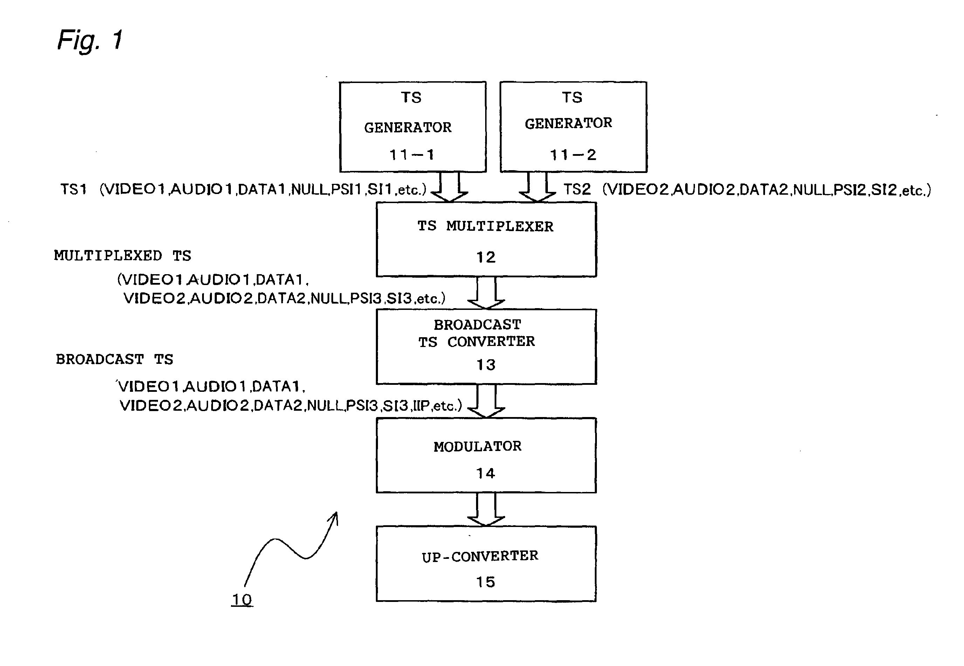

Fig. 1 illustrates an exemplary system for producing digital terrestrial broadcasting waves. As illustrated in Fig. 1, this system 10 comprises a plurality of TS generators 11, a TS multiplexer 12, a broadcast TS converter 13, a modulator 14, and an up-converter 15.
Each TS generator 11 multiplexes a video ES (elementary stream), an audio ES, and PSI/SI (Program Specification Information/Service Information) information to generate an MPEG-TS. The TS multiplexer 12 multiplexes MPEG-TS's from the plurality of TS generators 11, and PSI/SI information indicative of multiplexed information to generate another MPEG-TS. The broadcast TS converter 13 converts the MPEG-TS from the TS multiplexer 12 into a multiplexed frame structure, and adds transmission control information to the converted MPEG-TS to generate a broadcast TS. Here, the transmission control information includes ISDBT information multiplexed on a section of 189th to 196th bytes (eight bytes) of each broadcast TS packet, and information (modulation setting information) multiplexed on the broadcast TS as an IIP (ISDB-T information Packet) packet. The modulator 14 performs channel encoding based on the transmission control information in the broadcast TS, digitally modulates and generates a digitally modulated signal. The up-converter 15 converts the frequency of the digitally modulated signal and generates an RF broadcast wave.
The TS multiplexer 12 may be implemented, for example, by a software application named "SP-5002" available from Astro Design Inc. (see Non-Patent Document 1). The broadcast TS converter 13 may be implemented by a hardware component "BT-3902" (see Non-Patent Document 2) available from Leader Electronics Corporation.
It should be understood by those skilled in the art that the background art described herein may differ slightly from one country to another.

Non-Patent Document 1: Astro Design Inc., "SP-5002" (Description on Product), Internet <URL http://www.astrodesign.co.jp/shop/goods/goods.asp?goods=000000 0000112>
Non-Patent Document 2: Leader Electronics Corporation, "Report on Exhibition" (MPEG-TS Converter BT-3902), Internet <URL http://www.leader/co.jp/exhibition/re041203_1.html>

DISCLOSUREOF THE INVENTION

PROBLEMS TO BE SOLVED BY THE INVENTION

When the system illustrated in Fig. 1 conforms to the digital terrestrial broadcasting scheme of Japan (ISDB-T), the broadcast TS can support three layers at maximum. In this regard, a first layer supports fixed receivers such as a home television receiver set, a second layer supports portable receivers such as a portable telephone, PDA and the like, and a third layer supports mobile receivers such as those for use with cars.
As of 2005, the digital terrestrial broadcasting has been brought into practice only for fixed receivers, and the broadcasting for portable receivers is scheduled to be inaugurated around the spring of 2006 in some urban areas of Japan.
When the broadcasting is practiced for fixed receivers and portable receivers, the portable receiver extracts and receives a portion comprised of one segment (broadcast waves for portable receivers) from among RF broadcast waves comprised of 13 segments (broadcast waves for fixed receivers and portable receivers) to display images on a display of the portable receiver and output audio from an output unit of the portable receiver.
For examining or testing a portable receiver, broadcasting directed to portable receivers, in other words, a broadcast TS must be generated under conditions according to particular objects of the examination or test. Specifically, a portable receiver may be examined or tested, for example, for the following purposes:
(1) an examination which involves extracting only RF broadcast waves (one segment) for portable receives for demodulation;
(2) an examination which involves decoding a demodulated MPEG-TS signal to display images (video, data display) on a display and output audio from an output unit;
(3) a mutual verification examination conducted when contents of broadcast waves for portable receivers are associated with contents of broadcast waves for fixed receivers; and

(4) a mutual verification examination conducted when contents of broadcast waves for portable receivers are associated with contents of other communication means (Internet or the like).

A broadcast TS for examining or testing a portable receiver is, for example, a "standard test stream" provided by an aggregate corporation, Association of Radio Industries and Businesses (ARIB). The broadcast TS for examining or testing a portable receiver must be partially modified (altered) under conditions according to particular purposes of the examination or test.

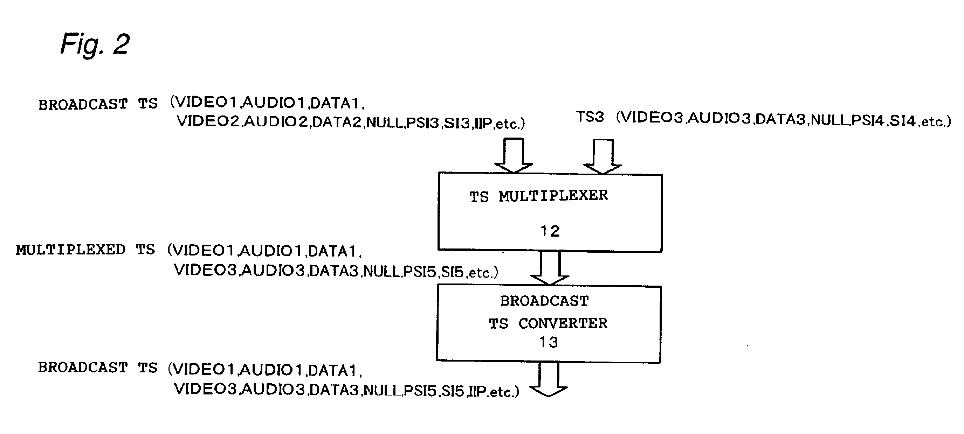

Fig. 2 illustrates an exemplary flow of data for modifying part of a broadcast ST. In order to modify part of a broadcast TS, the broadcast TS must be input to a TS multiplexer 12. Specifically, the TS multiplexer 12 receives the broadcast TS as a general MPEG-TS (removing transmission control information from the broadcast TS), and edits part of the input MPEG-TS. More specifically, the TS multiplexer 12 deletes one MPEG-TS (for example TS2) from among a plurality of multiplexed MPEG-TS's (for example, TS1, TS2), and multiplexes the remaining MPEG-TS (for example, TS1) with a separately input MPEG-TS (for example, TS3). A broadcast TS converter 13 converts the MPEG-TS (modified MPEG-TS) from the TS multiplexer 12 into a multiplexed frame structure, and adds transmission control information to the converted MPEG-TS to generate a broadcast TS (modified broadcast TS).

In this way, it is necessary to return a broadcast TS to a non-broadcast TS, and multiplex the non-broadcast TS with another TS in order to modify part of the broadcast TS. In this multiplexing, the TS multiplexer 12 processes all data in both the non-broadcast TS and other TS. Accordingly, when the TS multiplexer 12 is implemented in software, the TS multiplexer 12 cannot execute the multiplexing in real time. Alternatively, when the TS multiplexer 12 is implemented in hardware, the TS multiplexer 12 can execute the multiplexing in real time, but is expensive.

In addition, the modified non-broadcast TS must be converted into a broadcast TS again. Therefore, the broadcast converter 13 must be provided in order to modify part of the broadcast TS.

It is an object of the present invention to provide an apparatus for modifying part of a predetermined packet included in a broadcast TS input thereto.

It is another object of the present invention to provide an apparatus which is capable of processing a broadcast TS itself.

Other objects of the present invention will become apparent to those skilled in the art with reference to embodiments described below and the accompanying drawings.

MEANS FOR SOLVING THE PROBLEMS

An apparatus of the present invention comprises means (31, 43) for receiving a broadcast TS (transport stream) and detecting layer information in each broadcast TS packet, means (32, 51) for delaying the broadcast TS, means (37, 104) for inputting an MPEG-TS for rewriting, means (33, 61) for generating a signal for selecting a delayed broadcast TS when the layer information does not indicate a predetermined layer, and generating a signal for selecting an MPEG-TS packet for rewriting when the layer information indicates the predetermined layer, and means (38, 111) for selectively outputting the delayed broadcast TS packet and the MPEG-TS packet for rewriting.

The apparatus of the present invention may further comprise means (102) for retrieving a PID and a ServiceID of a PMT packet of the MPEG-TS for rewriting, means (34, 71, 72) for detecting a PAT packet of the broadcast TS, and modifying a PID and a ServiceID of a PMT packet described in the PAT packet and belonging to the predetermined layer to the PID and ServiceID of the PMT packet of the MPEG-TS for rewriting, and means (35, 81, 82) for detecting an NIT packet of the broadcast TS, and modifying a ServiceID of a PMT packet described in the NIT packet and belonging to the predetermined layer to the serviceID of the PMT packet of the MPEG-TS for rewriting, wherein the means (33, 61) for generating a signal for selecting a broadcast TS packet or an MPEG-TS packet for rewriting may further generate a signal for selecting a modified PAT packet when a PAT packet of the broadcast TS is detected, and generates a signal for selecting a modified NIT packet when an NIT packet of the broadcast TS is detected, and the means (38, 111) for selectively outputting a broadcast TS packet or a TS packet for rewriting may further selectively output the modified PAT packet and the modified NIT packet.

The means (102) for retrieving a PID and a ServiceID of a PMT packet may further retrieve a PID of a program described in an ES loop of the PMT packet, and may further comprise means (104) for passing therethrough an MPEG-TS packet which has the PID of the program described in the ES loop of the PMT packet, and means (103, 105, 106) for detecting a PCR packet of the MPEG-TS for rewriting, retrieving a PCR value of the PCR packet, generating a new PCR value from the retrieved PCR value, and generating a new PCR packet, the means (33, 61) for generating a signal for selecting the broadcast TS packet, MPEG-TS packet for rewriting, modified PAT packet, or modified NIT packet may further be operative when a new PCR packet is generated to generate a signal for selecting the generated PCR packet, and the means (38, 111) for selectively outputting the broadcast TS packet, TS packet for rewriting, modified PAT packet, or modified NIT packet may further selectively output the generated PCR packet.

The means (31, 43) for detecting layer information in each broadcast TS packet may further retrieve or generate a TSP counter value of each broadcast TS packet, and the means (103, 105, 106) for generating a new PCR packet may generate a new PCR packet when the retrieved or generated TSP counter value matches a predetermined TSP counter value.

Alternatively, the means (103, 105, 106) for generating a new PCR packet may generate a new PCR packet upon detection of a PCR packet of an MPEG-TS for rewriting.

The means (38, 111) for selectively outputting the broadcast TS packet, TS packet for rewriting, modified PAT packet, modified NIT packet or generated PCR packet may output part of the MPEG-TS packet for rewriting from the first to 188th bytes and immediately thereafter output part of the broadcast TS packet from the 189th to 204th bytes when the broadcast TS packet is output; output the broadcast TS packet from the first to 204 bytes when the broadcast TS packet is output, output part of the modified PAT packet from the first to 188th bytes and immediately thereafter outputs part of the broadcast TS packet from 189th to 204th bytes when the modified PAT packet is output; and output part of the modified NIT packet from the first to 188th bytes and immediately thereafter output the part of the broadcast TS packet from 189th to 204th bytes when the modified NIT packet is output, and may be operative when the generated PCR packet is output to output part of the generated PCR packet from the first to 188th bytes and immediately thereafter output part of the broadcast TS packet from 189th to 204th bytes.

BRIEF DESCRIPTION OF THE DRAWINGS

[Fig. 1]
Fig. 1 illustrates an exemplary system for producing digital terrestrial broadcasting waves.
[Fig. 2]
Fig. 2 illustrates an exemplary flow of data for modifying part of a broadcast TS.
[Fig. 3]

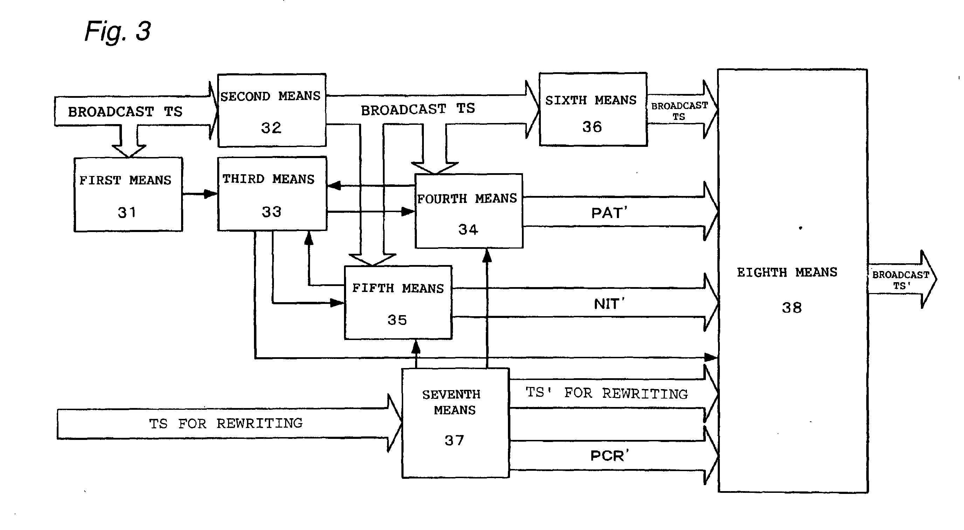

Fig. 3 is a block diagram generally illustrating an apparatus for modifying part of a broadcast TS in accordance with the present invention.
[Fig. 4]

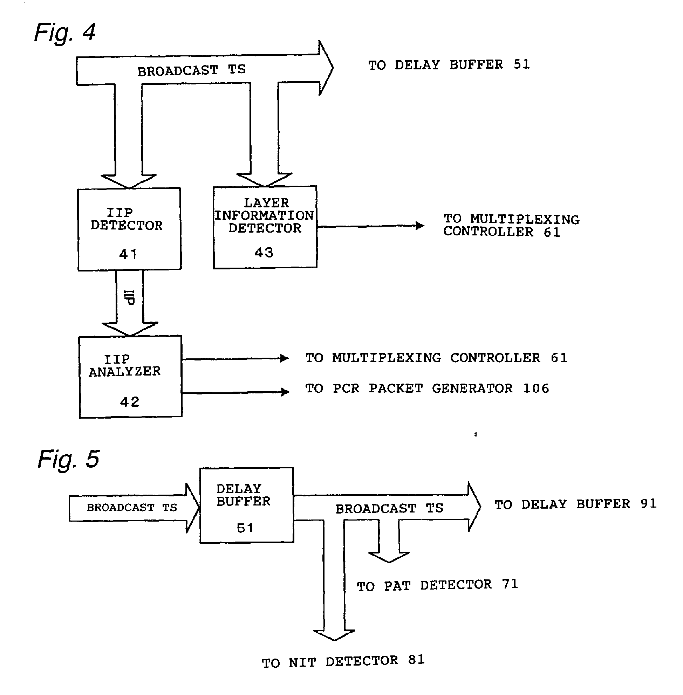

Fig. 4 illustrates a detailed block diagram of first means shown in Fig. 3.
[Fig. 5]
Fig. 5 illustrates a detailed block diagram of second means shown in Fig. 3.
[Fig. 6]

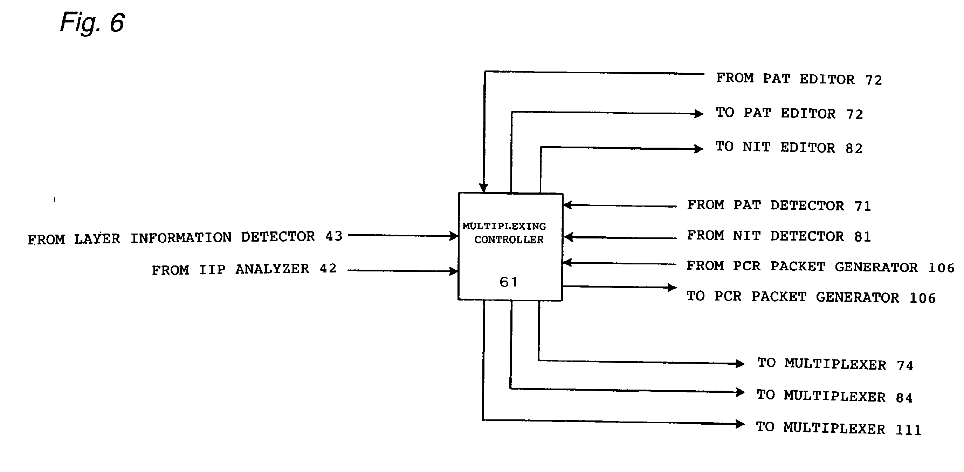

Fig. 6 illustrates a detailed block diagram of third means shown in Fig. 3.
[Fig. 7]

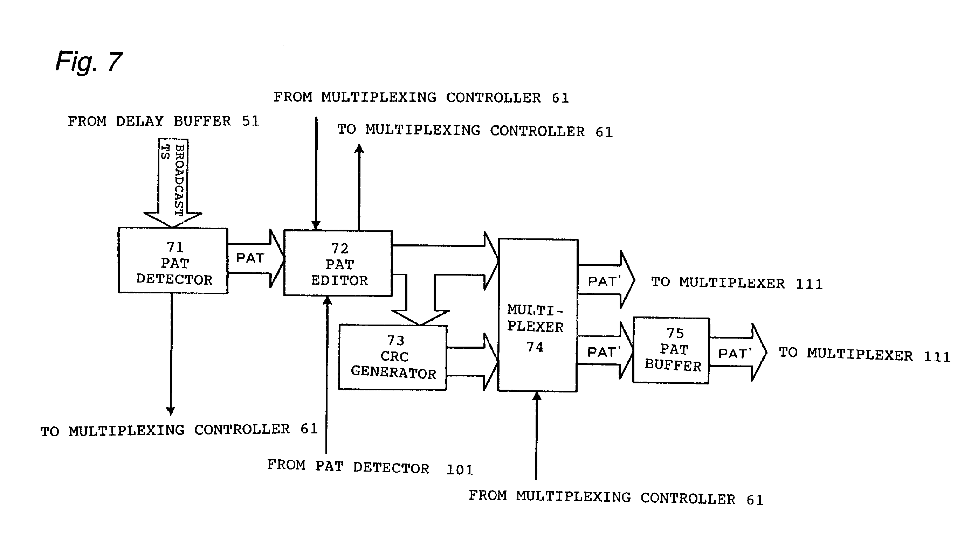

Fig. 7 illustrates a detailed block diagram of fourth means shown in Fig. 3.
[Fig. 8]

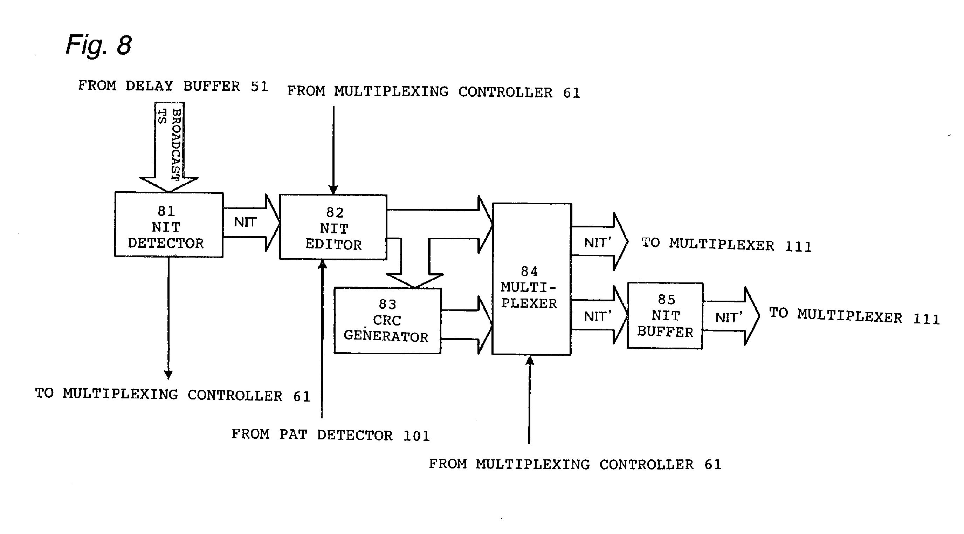

Fig. 8 illustrates a detailed block diagram of fifth means shown in Fig. 3.
[Fig. 9]

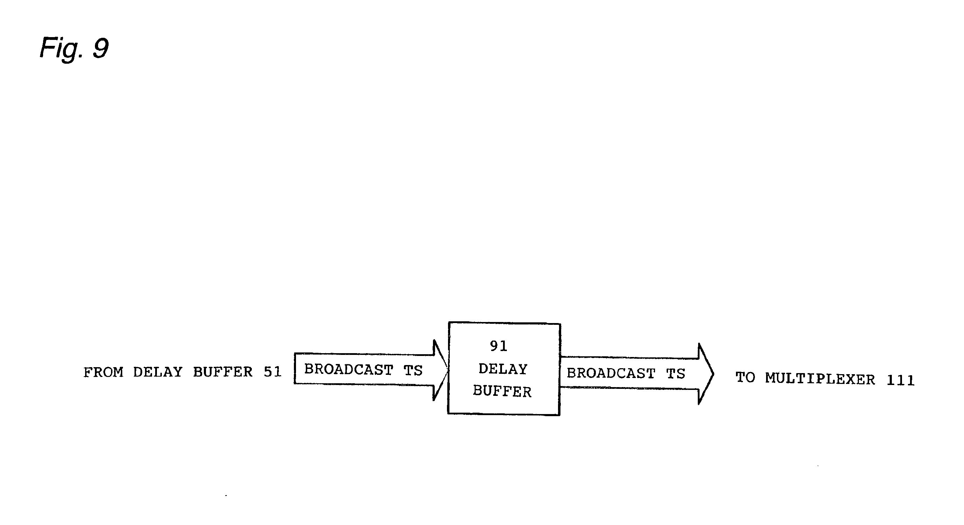

Fig. 9 illustrates a detailed block diagram of sixth means shown in Fig. 3.
[Fig. 10]

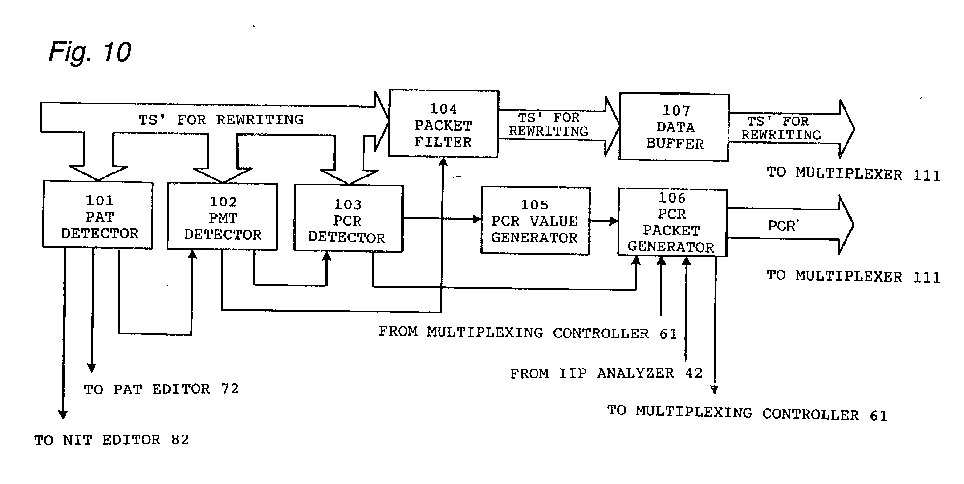

Fig. 10 illustrates a detailed block diagram of seventh means shown in Fig. 3.
[Fig. 11]

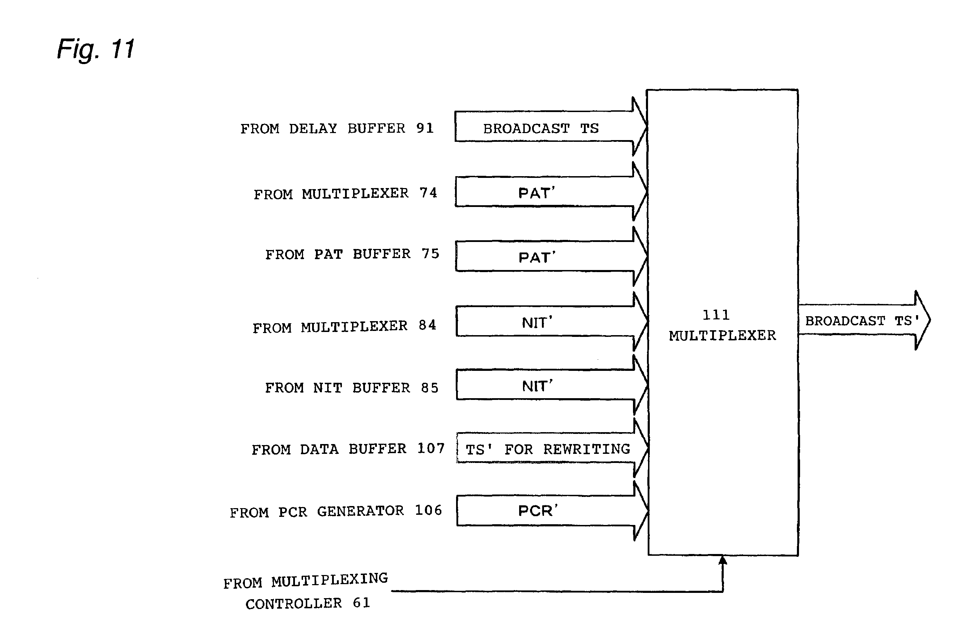

Fig. 11 illustrates a detailed block diagram of eighth means shown in Fig. 3.
[Fig. 12]

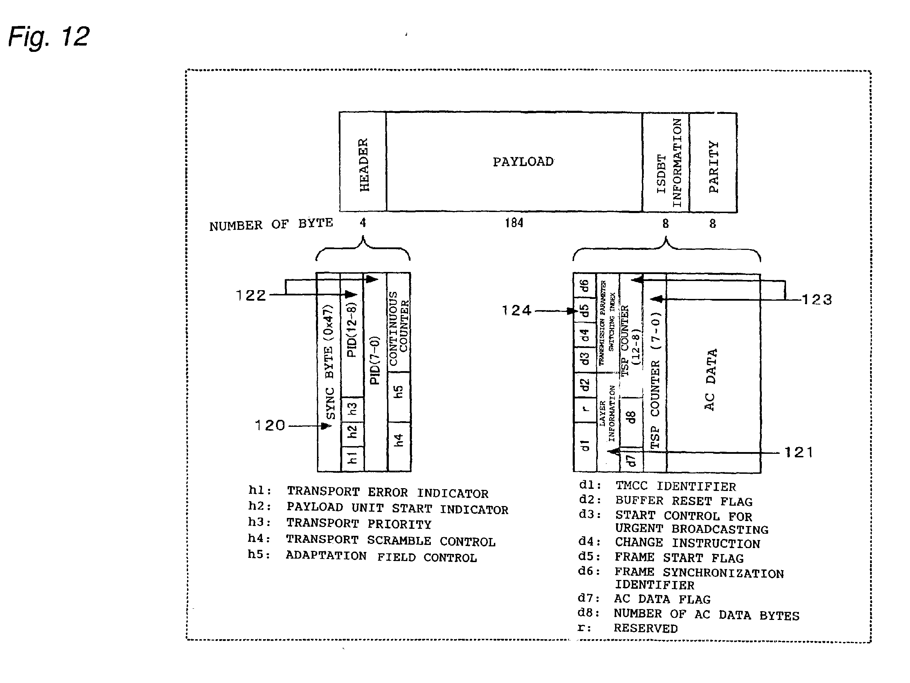

Fig. 12 is a diagram for describing an exemplary description of a broadcast TS packet.
[Fig. 13]

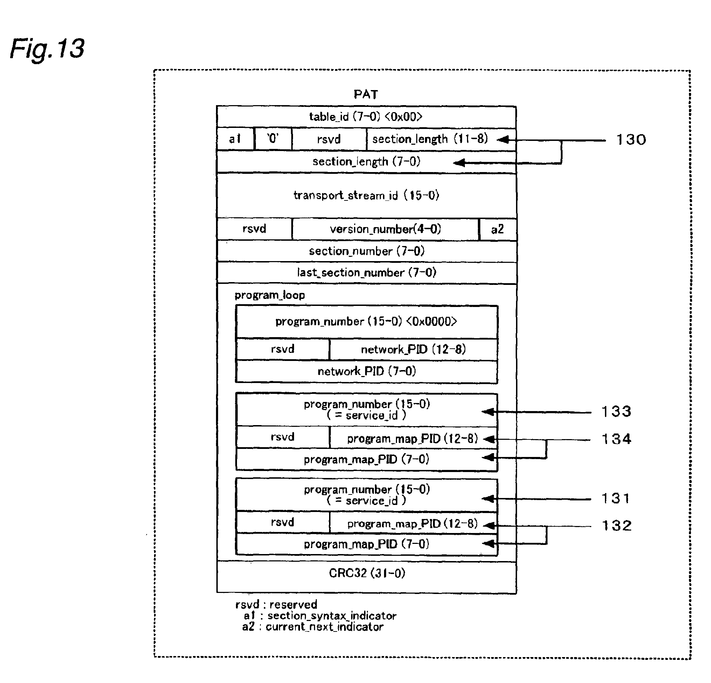

Fig. 13 is a diagram for describing exemplary descriptions of a PAT packet.
[Fig. 14]

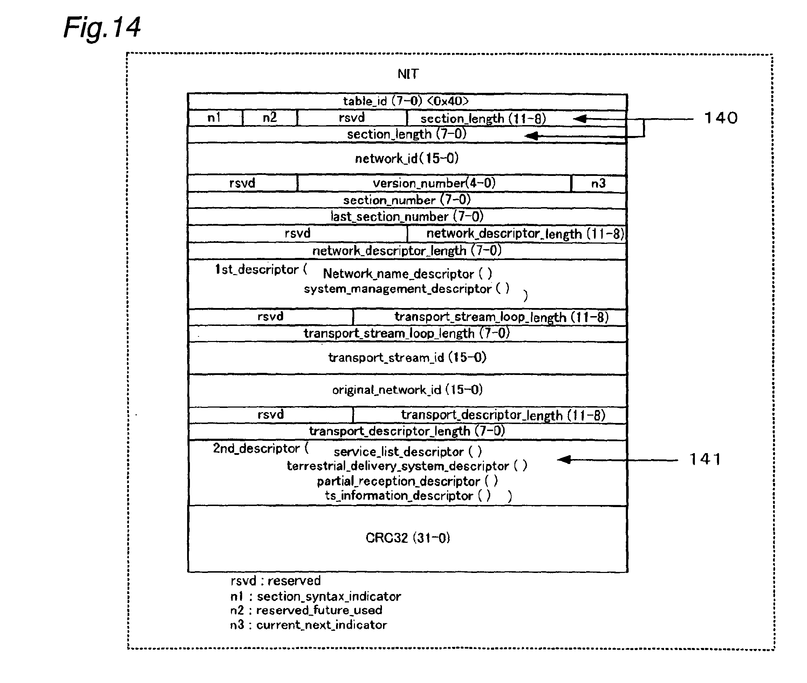

Fig. 14 is a diagram for describing exemplary descriptions of an NIT packet.

BEST MODES FOR CAYYING OUT THE INVENTION

Fig. 3 is a block diagram generally illustrating an apparatus for modifying part of a broadcast TS in accordance with the present invention. It should be noted that part of components shown in Fig. 3 can be omitted in the apparatus of the present invention.

The present invention generally comprises first means 31 for receiving a broadcast TS to detect layer information included in ISDBT information added to each broadcast TS packet: second means 32 for receiving the broadcast TS to delay the broadcast TS at least by a time required to detect the layer information in each broadcast TS packet; third means 33 for generating a signal for selecting a delayed broadcast TS packet when the layer information in the ISDBT information does not indicate a predetermined layer, and generating a signal for selecting a MPEG-TS packet for rewriting when the layer information indicates the predetermined layer; seventh means 37 for receiving the MPEG-TS for rewriting; and eighth means 38 for receiving a signal for selecting the delayed broadcast TS packet or the MPEG-TS packet for rewriting to selectively output the delayed broadcast TS packet and MPEG-TS packet for rewriting.

The apparatus of the present invention can further comprise seventh means 37 for receiving the MPEG-TS for rewriting to detect a PMT (Program Map Table) packet and retrieve the PID and Service ID of the PMT packet (for rewriting). In this regard, the seventh means 37 may receive a broadcast TS for rewriting instead of the MPEG-TS for rewriting. In this event, the seventh means 37 deletes transmission control information from the input broadcast TS, and extracts the MPEG-TS for rewriting from the broadcast TS.

The apparatus of the present invention can further comprise fourth means 34 for detecting a PAT (Program Association Table) packet to modify the PID and Service ID of a PMT packet described in the PAT packet, which are the PID and ServiceID of a PMT packet of the PID and Service ID of a PMT packet belonging to a predetermined layer, to the PID and Service ID of a PMT packet for rewriting; fifth means 35 for detecting an NIT (Network Information Table) packet to modify the ServiceID of a PMT packet described in the NIT packet to the ServiceID of a PMT packet for rewriting; and sixth means 36 for delaying the broadcast TS by a time required to determine whether or not each broadcast TS packet is a PAT packet or an NIT packet.

The fourth means 34 can further generate a signal which indicates that a PAT packet is detected; the fifth means 35 can further generate a signal which indicates that an NIT packet is detected; the third means 33 can further generate a signal for selecting a modified PAT packet or a modified NIT packet; and the eighth packet 38 can further selectively output the modified PAT packet and modified NIT packet.

The seventh means 37 can further store an MPEG-TS packet other than a PCR (Program Clock Reference) packet, the PAT packet, and the NIT packet, and generate a new PCR packet; the third means 33 can further generate a signal for selecting the stored MPEG-TS packet or generate PCR packet; and the eighth means 38 can further selectively output the stored MPEG-TS packet and generate PCR packet.

Fig. 4 illustrates a detailed block diagram of the first means shown in Fig. 3, and Fig. 12 is a diagram for describing exemplary descriptions of a broadcast TS packet.

A layer information detector 43 receives a broadcast TS and detects layer information in each broadcast TS packet. Specifically, the layer information detector 43 extracts a sync byte ("47" (0x47) in hexadecimal notation) (see an arrow 120 in Fig. 12) in each broadcast TS packet, and extracts the layer information (see an arrow 121 in Fig. 12) from the 190th byte of each broadcast TS packet. The layer information indicates, for example, an A-layer, a B-layer, a C-layer, or an invalid layer. The layer information detector 43 sends the detected layer information of each broadcast TS packet to a multiplexing controller 61.

In the detection of the layer information, the layer information detector 43 can detect the packet ID (PID) of each broadcast TS packet and send the PID to the multiplexing controller 61. Specifically, layer information detector 43 extracts the packet ID (PID) from the second to third bytes in each broadcast TS packet (see an arrow 122 in Fig. 12).

The layer information detector 43 can further extract a TSP counter value (see an arrow 123 in Fig. 12) from the 191th to 192th bytes of each broadcast TS packet. The TSP counter value indicates "0" at the first packet in a frame structure of the broadcast TS, and is incremented for each packet. Alternatively, the layer information detector 43 can extract a frame start packet flag value (see an arrow 124 in Fig. 12) from the 189th byte of each broadcast TS packet, instead of the TSP counter value, to generate the TSP counter value from the frame start packet flag value. The frame start packet flag value indicates "1" at the first packet in the frame structure of the broadcast TS, and indicates "0" at other packets than the first packet. When the layer information detector 43 detects the frame start packet flag value, the layer information detector 43 comprises a counter. The layer information detector 43 can generate a counter value such that the counter value generated by the layer information detector 43 is similar to the extracted TSP counter value, i.e. such that the counter value indicates "0" when the frame start packet flag value indicate "1" and is incremented for each packet. The layer information detector 43 sends the extracted (or generated) counter value to multiplexing controller 61.

The apparatus of the present invention can further comprise an IIP (ISDB-T Information Packet) detector 41 and an IIP analyzer 42.

The IIP detector 41 receives a broadcast TS, and determines whether or not each broadcast TS packet is an IIP packet. Specifically, the IIP detector 41 extracts a sync byte (see the arrow 120 in Fig. 12) in each broadcast TS packet, extracts the packet ID (PID) (see the arrow 122 in Fig. 12) from the second to third bytes of each broadcast TS packet, and determines whether or not the PID of each broadcast TS packet is the PID of IIP packet ("1FF0" (0x1FF0) in hexadecimal notation). When the PID of each broadcast TS packet is the PID of IIP packet, the IIP packet detector 41 sends the IIP packet having the PID "0x1FF0" to the IIP analyzer 42.

The IIP analyzer 42 analyzes a payload of the IIP packet to retrieve information which indicates whether or not at least partial reception is ON (for example, ON) from modulation setting information included in the transmission control information. The IIP analyzer 42 sends the information which indicates whether or not partial reception is ON to the multiplexing controller 61 and a PCR packet generator 106. The IIP analyzer 42 may send the information which indicates whether or not partial reception is ON to a delay buffer 51.

The IIP analyzer 42 can retrieve mode information (for example, 3) and guard interval information (for example, 1/8) which comprise modulation setting information other than the information which indicates whether or not partial reception is ON, and send them to multiplexing controller 61. The IIP analyzer 42 can also retrieve modulation setting information other than the information which indicates whether or not partial reception is ON, mode information, and guard interval information (for example, a modulation scheme (for example, a modulation scheme of the A-layer is QPSK, and a modulation scheme for the B-layer is 64QM), a coding rate (for example, the coding rate of the A-layer is 1/2, an and the coding rate of the B-layer is 3/4), and the number of segments (for example, the number of segments in the A-layer is one, and the number of segments in the B-layer is 12)) for each layer, and send them to the multiplexing controller 61.

Fig. 5 illustrates a detailed block diagram of the second means shown in Fig. 3.

A delay buffer 51 receives a broadcast TS, and delays the broadcast TS by a time required by the layer information detector 43 to detect layer information of each broadcast TS packet. The time required by the layer information detector 43 to detect layer information of each broadcast TS packet is a time corresponding to at least 191 bytes, for example, a time corresponding to one packet length (204 bytes). The delay buffer 51 sends the delayed broadcast TS to a PAT detector 71, an NIT detector 81, and a delay buffer 91.

When the delay buffer 51 receives the information indicating whether partial reception is ON from the IIP analyzer 42, the delay buffer 51 may delay the broadcast TS by a time required by the layer information detector 43 to detect the layer information of each broadcast TS packet and the TSP counter value (specifically, a time corresponding to at least 192 bytes.

When program information on a predetermined layer of a broadcast TS (the PID of a PMT packet and ServiceID described in the PMT packet) matches program information for rewriting (the PID of a PMT packet and ServiceID described in the PMT packet), i.e., when there is no need to modify the PAT packet or NIT packet of the broadcast TS, the delay buffer 51 can send the delayed broadcast TS to a multiplexer 111.

Fig. 6 illustrates a detailed block diagram of the third means shown in Fig. 3.

The multiplexing controller 61 stores a predetermined layer (for example, the A-layer) selected by the user. The multiplexing controller 61 receives the layer information detected from each broadcast TS packet from the layer information detector 43. The multiplexing controller 61 analyzes the layer information to determine which layer the layer information indicates. The multiplexing controller 61 generates a signal for selecting a delayed broadcast TS packet when the layer information does not indicate the predetermined layer (for example, the A-layer), whereas the multiplexing controller 61 generates a signal for selecting an MPEG-TS packet for rewriting when the layer information indicates the predetermined layer. The multiplexing controller 61 sends the signal for selecting the delayed broadcast TS packet or MPEG-TS packet for rewriting to the multiplexer 111.

The multiplexing controller 61 can receive a signal which indicates that a PAT packet has been detected from the PAT detector 71, and receive a signal which indicates that an NIT packet has been detected from the NIT detector 81. The multiplexing controller 61 can generate a signal for selecting a modified PAT packet when it receives the signal which indicates that a PAT packet has been received, and can generate a signal for selecting a modified NIT packet when it receives the signal which indicates that an NIT packet has been detected. The multiplexing controller 61 can send a signal for selecting the delayed broadcast TS packet, modified PAT packet, modified NIT packet, or MPEG-TS packet for rewriting to the multiplexer 111. In this regard, the signal for selecting the modified PAT packet or modified NIT packet is preferred to the signal for selecting the delayed broadcast TS packet.

The multiplexing controller 61 can receive a signal which indicates that a PCR packet has been generated from the PCR packet generator 106, and can generate a signal for selecting the generated PCR packet. The multiplexing controller 61 can generate a signal for selecting a stored MPEG-TS packet instead of a signal for selecting an MPEG-TS packet for rewriting. The multiplexing controller 61 can send a signal for selecting the delayed broadcast TS packet, modified PAT packet, modified NIT packet, stored MPEG-TS packet, or generated PCR packet to the multiplexer 111. In this regard, the signal for selecting the generated PCR packet is preferred to the signal for selecting the stored MPEG-TS packet.

The multiplexing controller 61 receives the information which indicates whether or not partial reception is ON from the IIP analyzer 42.

When partial reception is ON, the multiplexing controller 61 can receive a TSP counter value from the layer information detector 43. During an analysis made on the layer information, the multiplexing controller 61 also analyzes the TSP counter value. When the layer information indicates a predetermined layer, the multiplexing controller 61 stores one of TSP counter values of packets which indicate the predetermined layer (for example, the smallest value of the TSP counter values indicative of the predetermined layer).

The multiplexing controller 61 determines whether or not the TSP counter value from the layer information detector 43 matches a stored TSP counter value (predetermined TSP counter value), and generates a signal which indicates that a PCR packet should be generated, when both match, and sends the signal to the PCR packet generator 106.

The multiplexing controller 61 can receive mode information from the IIP analyzer 42. When the mode information indicates "2," the multiplexing controller 61 may store two TSP counter values indicative of the predetermined layer, and when the mode information indicates "3," the multiplexing controller 61 may store four TSP counter values of packets indicative of the predetermined layer. The multiplexing controller 61 can receive guard interval information from the IIP analyzer 42, and can store a table which represents the relationship between the mode information and guard interval information and the number of packets per frame. The multiplexing controller 61 can retrieve the number of packets per frame corresponding to the received mode information and guard interval information with reference to the table. For example, when the mode information indicates "2" with the guard interval information indicating "1/8," the number of packets is 2,304 packets per frame, whereas when the mode information indicates "3" with the guard interval information indicating "1/8," the number of packets is 4,608 packets per frame. When the multiplexing controller 61 stores a plurality of TSP counter values, the TSP counter values are preferably at equal intervals. When the multiplexing controller 61 stores two TSP counter values with the number of packets per frame being equal to 2,304 packets, the two TSP counter values are, for example, 96 (for example, the smallest value of the TSP counter values indicative of the predetermined layer) and 1,248 (=96+2,304/2). When the multiplexing controller 61 stores four TSP counter values with the number of frames per frame being equal to 4,608, two TSP counter values are, for example, 96 (for example, the smallest value of the TSP counter values indicative of the predetermined layer), 1,248 (=96+4,608/4), 2,400 (1,248+4,608/4), and 3,552 (=2400+4,608/4).

The multiplexing controller 61 can receive modulation setting information other than the information which indicates whether or not partial reception is ON, mode information, and guard interval information, from the IIP analyzer 42. The multiplexing controller 61 can calculate a bit rate at which data can be multiplexed on the predetermined layer (for example, the A-layer) from the modulation setting information. Specifically, when the mode information is "3," the guard interval information is "1/8," a modulation scheme of the A-layer is QPSK, the coding rate of the A-layer is 1/2, and the number of segments on the A-layer is one, data can be multiplexed on the A-layer at a bit rate of 312.066 kbps. The multiplexing controller 61 makes the calculated bit rate displayable. The multiplexing controller 61 can make the modulation setting information displayable instead of the calculated bit rate or in addition to the calculated bit rate.

A method of calculating the bit rate can involve retrieving the bit rate from the table which represents the relationship between the modulation setting information and bit rate, or involve calculating the bit rate from the modulation setting information using an equation. The equation conforming to the digital terrestrial broadcasting scheme of Japan is:

$$R = (376/1071)M \cdot C \cdot N/(1+G) \text{ Mbps}$$

where R, M, C, G, N are the bit rate, the number of bits per symbol (for example, 6 (64QAM), 4 (16QAM), 2 (QPSK, DQPSK)), a convolution coding rate (for example, 7/8, 5/6, 3/4, 2/3, 1/2), a guard interval ratio (for example, 1/32, 1/16, 1/8, 1/4), and the number of used segments (integer ranging from one to 13), respectively. Constant (376/1071) = Bandwidth per Segment (6/14 MHz) x Reed-Solomon Coding Rate (188/204) x Insertion Loss Factor (96/108) of Control Signals (Pilot, TMCC and the like).

The multiplexing controller 61 can receive a signal which indicates that the number of writes has exceeded a predetermined value from a data buffer 107 (for example, FIFO). The predetermined value may be, for example, equal to or slightly smaller than the capacity of the buffer. When the number of writes exceeds the predetermined value, data flowing into the data buffer 107 overflows, so that the multiplexing controller 61 sends only a signal for selecting a broadcast TS packet to the multiplexer 111. In other words, the apparatus of the present invention can get rid of modifying the broadcast TS. Also, the multiplexing controller 61 can display that data flowing into the data buffer 107 is overflowing.

The multiplexing controller 61 can receive the PID detected from each broadcast TS packet from the layer information detector 43. The multiplexing controller 61 determines whether or not the PID detected from each broadcast TS packet is the PID of NIT packet ("0010" (0x0010) in hexadecimal notation). When the PID detected from each broadcast TS packet is the PID of NIT packet, the multiplexing controller 61 further determines whether or not the layer information of the broadcast TS packet indicates a predetermined layer (for example, the A-layer). When the NIT packet included in the broadcast TS indicates the predetermined layer, the multiplexing controller 61 further determines whether or not it has received a signal which indicates that a PCR packet has been generated.

When the NIT packet included in the broadcast TS indicates the predetermined layer, and the multiplexing controller 61 has received the signal which indicates that a PCR packet had been received, the multiplexing controller 61 sends a signal which indicates that a modified NIT packet should be stored to the multiplexer 84, and sends a signal for selecting the generated PCR packet, instead of a signal for selecting the modified NIT packet, to the multiplexer 111. Subsequently, when the multiplexing controller 61 no longer receives the signal which indicates that a PCR packet has been received, the multiplexing controller 61 sends the signal for selecting a stored NIT packet to the multiplexer 111, instead of the signal for selecting a stored MPEG-TS packet. In other words, the signal for selecting a generated PCR packet is preferred to the signal for selecting a stored NIT packet, while the signal for selecting a stored NIT packet is preferred to the signal for selecting a stored MPEG-TS packet.

Even if the NIT packet included in the broadcast TS indicates the predetermined layer, the multiplexing controller 61 sends the signal for selecting a modified NIT packet to the multiplexer 111, in a manner similar to the aforementioned operation, unless the multiplexing controller 61 receives the signal which indicates that a PCR packet has been received.

The multiplexing controller 61 determines whether or not the PID detected from each broadcast TS packet is the PID of PAT packet ("0000" (0x0000) in hexadecimal notation). When the PID detected from each broadcast TS packet is the PID of PAT packet, the multiplexing controller 61 further determines, in a manner similar to an NIT packet, whether or not the layer information of the broadcast TS packet indicates a predetermined layer or not. When the PAT packet included in the broadcast TS indicates the predetermined layer, the multiplexing controller 61 further determines whether or not it has received a signal which indicates that a PCR packet had been received.

When the PAT packet included in the broadcast TS indicates the predetermined layer, and the multiplexing controller 61 has received the signal which indicates that a PCR packet had been received, the multiplexing controller 61 sends a signal, which indicates that a modified PAT packet should be stored, to the multiplexer 74 and sends a signal for selecting the generated PCR packet to the multiplexer 111, instead of a signal for selecting the modified PAT packet. Subsequently, when the multiplexing controller 61 no longer receives the signal which indicates that a PCR packet has been received, the multiplexing controller 61 sends a signal for selecting a stored PAT packet to the multiplexer 111, instead of the signal for selecting a stored MPEG-TS packet or a stored NIT packet. In other words, the signal for selecting the generated PCR packet is preferred to the signal for selecting the stored PAT packet; the signal for selecting the generated NIT packet is preferred to the signal for selecting the stored PAT packet; and the signal for selecting the stored PAT packet is preferred to the signal for selecting the stored MPEG-TS packet.

The multiplexing controller 61 can receive all sets of PID's and ServiceID's of PMT packets described in the PAT packet of the broadcast TS (for example, PID (0x01FF) and ServiceID (0x0400) of PMT1 and PID (0x1FC8) and ServiceID (0x0580) of PMT2) from a PAT editor 72, as will be later described. Since the multiplexing controller 61 receives the PID and layer information of each detected broadcast TS packet from the layer information detector 43, the multiplexing controller 61 determines to which layer each set of the PID and Service ID of a PMT packet from the PAT editor 72 belongs, stores those PID's and ServiceID's of PMT packets which belong to the predetermined layer, and sends them to the PAT editor 72. Also, the multiplexing controller 61 sends the ServiceID's of PMT packets which belong only to the predetermined layer to the an NIT editor 82.

Specifically, the multiplexing controller 61 determines whether or not the PID of each broadcast TS packet from the layer information detector 43 matches the PID of a PMT packet from the PAT editor 72 (for example, PID (0x01FF) of PMT1 and PID (0x1FC8) of PMT2). The multiplexing controller 61 further determines whether or not the layer of a matching broadcast TS packet (PMT packet) indicates a predetermined layer (for example, the A-layer). For example, when the PID of PMT1 indicates the B-layer, and the PID of PMT2 indicates the A-layer, the PID and ServiceID of a PMT packet belonging to the predetermined layer are the PID (0x1FC8) and ServiceID (0x0580) of PMT2. It should be noted that a set of PID and ServiceID of a PMT indicates the same layer. The multiplexing controller 61 sends the PID (for example 0x1FC8) and ServiceID (for example, 0x0580) of the PMT packet belonging only to the predetermined layer (for example, A-layer) to the PAT editor 72. The multiplexing controller 61 also sends the ServiceID (for example, 05x0580) of the PMT packet belonging only to the predetermined layer to the NIT editor 82.

Fig. 7 illustrates a detailed block diagram of the fourth means shown in Fig. 3.

The PAT detector 71 receives a delayed broadcast TS from the delay buffer 51 to detect a PAT packet. Specifically, the PAT detector 71 extracts a sync byte (see the arrow 120 in Fig. 12) of each broadcast TS packet, extracts a packet ID (PID) (see the arrow 122 in Fig. 12) from the second to third bytes of each broadcast TS packet, and determines whether or not the PID of each broadcast TS packet is the PID of PAT packet ("0000" (0x0000) in hexadecimal notation). When the PID of each broadcast TS packet is the PID of PAT packet, the PAT detector 71 sends a PAT packet having the PID "0x0000" to the PAT editor 72. The PAT detector 71 also sends a signal which indicates that a PAT packet has been detected to the multiplexing controller 61. In an initial operation of the PAT detector 71, the PAT detector 71 may not send the signal which indicates that a PAT packet has been detected to the multiplexing controller 61.

Fig. 13 is a diagram for describing exemplary descriptions of the PAT packet.

(Initial Operation of PAT Editor 72)

The PAT editor 72 receives a PAT packet of a broadcast TS from the PAT detector 71. The PAT editor 72 analyzes descriptions of the PAT packet to retrieve all sets of PID's and ServiceID's (see arrows 131 - 134 in Fig. 13) of PMT packets described in the PAT packet, and sends them to the multiplexing controller 61.

(Normal Operation of PAT Editor 72)

The PAT editor 72 receives a PAT packet of a broadcast TS from the PAT detector 71. The PAT editor 72 also receives the PID and ServiceID of a PMT packet for rewriting from the PAT detector 101. The PAT editor 72 further receives the PID and ServiceID of a PMT packet, which belongs to a predetermined layer, from the multiplexing controller 61. The PAT editor 72 analyzes descriptions of the PAT packet to retrieve a section length (see an arrow 130 in Fig. 13) of the PAT packet. Also, during an analysis made on the descriptions of the PAT packet, the PAT editor 72 retrieves positions (see an arrow 131 and an arrow 132 in Fig. 13) at which the PID and ServiceID are described for the PMT packet belonging to the predetermined layer (for example, the A-layer) of the broadcast TS, and overwrites the PID and ServiceID of a PMT packet for rewriting at the respective positions. Based on the section length of the PAT packet of the broadcast TS, the PAT editor 72 generates section data (in which the ServiceID and PID of the PMT packet have been modified) within the PAT packet of the broadcast TS. The PAT editor 72 sends the section data to a CRC (Cyclic Redundancy Check) generator 73 and a multiplexer 74.

The CRC generator 74 generates a new CRC code based on the section data, and sends the new CRC code to the multiplexer 74. The multiplexer 74 multiplexes the section data and new CRC code, and sends a modified PAT packet to the multiplexer 111.

The multiplexer 74 can receive a signal which indicates that the modified PAT packet should be stored from the multiplexing controller 61. Upon receipt of the signal which indicates that the modified PAT packet should be stored, the multiplexer 74 sends the modified PAT packet to a PAT buffer 75, instead of the multiplexer 111. The PAT buffer 75 stores the modified PAT packet and sends it to the multiplexer 111.

Fig. 8 illustrates a detailed block diagram of the fifth means shown in Fig. 3.

The NIT detector 81 receives a delayed broadcast TS from the delay buffer 51, and detects an NIT packet. Specifically, the NIT detector 71 extracts a sync byte (see the arrow 120 in Fig. 12) in each broadcast TS packet, extracts a packet ID (PID) (see the arrow 122 in Fig. 12) from the second to third bytes of each broadcast TS packet, and determines whether or not the PID of each broadcast TS packet is the PID of NIT packet ("0010" (0x0010) in hexadecimal notation). When the PID of each broadcast TS packet is the PID of NIT packet, the NIT detector 81 sends a signal which indicates that an NIT packet has been detected to the multiplexing controller 61. The NIT detector 81 sends the NIT packet having the PID "0x0010" to the NIT editor 82.

Fig. 14 is a diagram for describing exemplary descriptions of the NIT packet.

The NIT editor 82 receives the ServiceID for rewriting from the PAT detector 101. The NIT editor 82 also receives an NIT packet of a broadcast TS from the NIT detector 81. The PAT editor 72 further receives the ServiceID of a PMT packet belonging to a predetermined layer from the multiplexing controller 61. The NIT editor 82 analyzes descriptions of the NIT packet to retrieve a section length of the NIT packet (see an arrow 140 in Fig. 14). Also, during the analysis made on the descriptions of the NIT packet, the NIT editor 82 retrieves a position (see an arrow 141 in Fig. 14) at which the ServiceID belonging to a predetermined layer of the broadcast TS (ServiceID of a PMT packet belonging to the predetermined layer) is described, and overwrites the ServiceID for rewriting at the position. The NIT editor 82 generates section data (in which the ServiceID has been modified) of the NIT packet of the broadcast TS based on the section length of the NIT packet of the broadcast TS. The NIT editor 82 sends the section data to a CRC generator 83 and a multiplexer 84.

The CRC generator 84 generates a new CRC code based on the section data, and sends the new CRC data to the multiplexer 84. The multiplexer 84 multiplexes the section data and new CRC code, and sends a modified NIT packet to the multiplexer 111.

The multiplexer 84 can receive a signal which indicates that the modified NIT packet should be stored from the multiplexing controller 61. Upon receipt of the signal which indicates that the modified NIT packet should be stored, the multiplexer 84 sends the modified NIT packet to the NIT buffer 85, instead of the multiplexer 111. The NIT buffer 85 stores a modified PAT packet, and sends it to the multiplexer 111.

Fig. 9 illustrates a detailed block diagram of the sixth means shown in Fig. 3.

A delay buffer 91 receives a delayed broadcast TS from the delay buffer 51. The delay buffer 91 delays the broadcast TS by a time required by the PAT detector 71 or NIT detector 81 to determine whether each broadcast TS packet is a PAT packet or an NIT packet. The time required by the PAT detector 71 or NIT detector 81 to determine whether each broadcast TS packet is a PAT packet or an NIT packet is, stated another way, a time required by the PA detector 71 or NIT detector 81 to extract the PID of each broadcast TS packet, specifically, a time corresponding to at least three bytes. The delay buffer 91 sends the further delayed broadcast TS to the multiplexer 111.

Fig. 10 illustrates a detailed block diagram of the seventh means shown in Fig. 3.

The data buffer 107 (for example, FIFO) receives an MPEG-TS for rewriting, stores the MPEG-TS for rewriting, and sends the MPEG-TS for rewriting to the multiplexer 111. In this regard, program information (PID and ServiceID of a PMT packet) for rewriting matches program information (PID and ServiceID of a PMT packet) on a predetermined layer (for example, the A-layer) of a broadcast TS.

When the program information for rewriting does not match the program information on the predetermined layer of the broadcast TS, the present invention can further comprise a PAT detector 101, a PMT detector 102, a PCR detector 103, a packet filter 104, a PCR value generator 105, and a PCR generator 106, where the data buffer 107 receives an MPEG-TS packet from the packet filter 104, instead of the MPEG-TS for rewriting.

When the number of writes from the packet filter 104 exceeds a predetermined number, the data buffer 107 can send a signal which indicates that the number of writes has exceeded the predetermined number to the multiplexing controller 61.

The PAT detector 101 receives the MPEG-TS for rewriting, and determines whether or not each MPEG-TS packet is a PAT packet. Specifically, the PAT detector 101 extracts a sync byte (see the arrow 120 in Fig. 12) in each MPEG-TS packet, extracts a packet ID (PID) (see the arrow 122 in Fig. 12) from the second to third bytes of each MPEG-TS packet, and determines whether or not the PID of each MPEG-TS packet is the PID of PAT packet ("0000" (0x0000) in hexadecimal notation). When the PID of at least one MPEG-TS packet is the PID of PAT packet, the PAT detector 101 analyzes descriptions of the PAT packet having the PID "0x0000," retrieves the PID of at least one type of PMT packet, and sends the retrieved PID of the PMT packet to the PMT detector 102. Also, during the analysis on the descriptions of the PAT packet, the PAT detector 101 retrieves the ServiceID of the retrieved PMT packet as well. The PAT detector 101 sends the PID and ServiceID of the retrieved PMT packet (i.e., the PID and ServiceID of the PMT packet for rewriting) to the PAT editor 72. The PAT detector 101 sends the ServiceID of the retrieved PMT packet (i.e., the ServiceID for rewriting) to the NIT editor 82.

When there are a plurality of PMT packets described in the PAT packet included in the MPEG-TS for rewriting, the PAT detector 101 can retrieve a plurality of sets of PID's and ServiceID's of the PMT packets. In this event, the PAT detector 101 can select a set of PID and ServiceID of a PMT packet from among the retrieved plurality of sets of PID's and ServiceID's of the PMT packets. The PAT detector 101 sends only the PID of a PMT packet selected by the user to the PMT detector 102. The PAT detector 101 sends only the PID and ServiceID of a PMT packet selected by the user to the PAT editor 72. The PAT detector 101 sends only the ServiceID of the PMT packet selected by the user to the NIT editor 82.

The PMT detector 102 receives the PID of the retrieved (or selected) PMT packet from the PAT detector 101. The PMT detector 102 receives the MPEG-TS for rewriting, and determines whether or not each MPEG-TS packet is a packet (PMT packet) which has the PID of the retrieved (or selected) PMT. The PMT detector 102 analyzes descriptions of the PMT packet, and retrieves the PID's of all programs described in an ES loop of the PMT packet for listing. The PMT detector 102 sends the list of the retrieved PID's to the packet filter 104. During the analysis made on the descriptions of the PMT packet, the PMT detector 102 retrieves the PID of a PCR packet as well. The PMT detector 102 sends the PID of the PCR packet to the PCR detector 103. The PMT detector 102 may send the PID of the PCR packet to the PCR packet generator 105.

The PCR detector 103 receives the PID of the PCR packet from the PMT detector 102. The PAT detector 101 receives the MPEG-TS for rewriting, and determines whether or not each MPEG-TS packet is a packet (PCR packet) having the PID of the PCR packet. When each MPEG-TS packet is a packet (PCR packet) having the PID of the PCR packet, the PCR detector 103 generates a signal which indicates that a PCR packet should be generated, and sends this signal to the PCR packet generator 106.

The PCR detector 103 further analyzes descriptions of the PCR packet to retrieve a PCR value. The PCR detector 103 may retrieve another PCR value from another PCR packet as required. The PCR detector 103 sends the PCR value to the PCR value generator 105, and sends the PID of the PCR packet to the PCR packet generator 106. Alternatively, the PID of the PCR packet may be sent from the PMT detector 102 to the PCR packet generator 106.

The packet filter 104 receives the PID list from the PMT detector 102. The packet filter 104 also receives the MPEG-TS for rewriting. The packet filter 104 determines whether or not each MPEG-TS packet is a packet having a PID in the list. The packet filter 104 sends only those packets which have PID's in the list to the data buffer 107. In this regard, the PID list does not contain the PID of PCR packets, so that the packet filter 104 does not allow PCR packets of the MPEG-TS for rewriting to pass therethrough. The PCR packet is generated by the PCR packet generator 106.

The PCR value generator 105 receives the PCR value from the PCR detector 103. The PCR value generator 105 treats the first received PCR value as an initial value, and counts the PCR from the initial value in a predetermined method (for example, the method defined by ISO/IEC13818-1) to generate the PCR value. The PCR value generator 105 sends the generated PCR value to the PCR packet generator 106. In this regard, the PCR value is incremented at a certain rate and is therefore varying.

The PCR packet generator 106 receives the PID of the PCR packet from the PMT detector 102 or PCR detector 103. The PCR packet generator 106 also receives the generated PCR value from the PCR value generator 105. The PCR packet generator 106 further receives information which indicates whether or not partial reception is ON from the IIP analyzer 42.

When partial reception is ON, the PCR packet generator 106 receives the signal which indicates that a PCR packet should be generated from the multiplexing controller 61. When partial reception is OFF, the PCR packet generator 106 receives the signal which indicates that a PCR packet should be generated from the PCR detector 103.

Each time the PCR packet generator 106 receives the signal which indicates that a PCR packet should be generated, the PCR packet generator 106 generates a PCR packet from the PCR value and the PID value of the PCR packet at the time when it receives the signal which indicates that a PCR packet should be generated, and sends the generated PCR packet to the multiplexer 111. Also, each time the PCR packet generator 106 generates a PCR packet, the PCR packet generator 106 sends a signal which indicates that a PCR packet has been generated to the multiplexing controller 61.

Fig. 11 illustrates a detailed block diagram of the eighth means shown in Fig. 3.

The multiplexer 111 receives, from the multiplexing controller 61, a signal for selecting a delayed broadcast TS packet or an MPEG-TS packet for rewriting. The multiplexer 111 also receives a delayed broadcast TS packet from the delay buffer 51. The multiplexer 111 further receives an MPEG-TS packet for rewriting from the data buffer 107. In this regard, the multiplexer 111 selectively switches and outputs the delayed broadcast TS packet or MPEG-TS packet for rewriting in accordance with the signal from the multiplexing controller 61.

When program information on a predetermined layer of a broadcast TS does not match program information for rewriting, the multiplexer 111 receives a signal for selecting the delayed broadcast TS packet, modified PAT packet, modified NIT packet, or MPEG-TS packet for rewriting from the multiplexing controller 61. The multiplexer 111 also receives the modified PAT packet from the multiplexer 74 or PAT buffer 75. The multiplexer 111 further receives the modified NIT packet from the multiplexer 84 or NIT buffer 85. The multiplexer 111 selectively switches and outputs the delayed broadcast TS packet, modified PAT packet, modified NIT packet, or MPEG-TS packet for rewriting in accordance with the signal from the multiplexing controller 61.

The multiplexer 111 can receive, from the multiplexing controller 61, a signal for selecting the delayed broadcast TS packet, modified PAT packet, modified NIT packet, stored MPEG-TS packet, or generated PCR packet. The multiplexer 111 can also receive the PCR packet from the PCR generator 106. The multiplexer 111 can selectively switch and output the delayed broadcast TS packet, modified PAT packet, modified NIT packet, stored MPEG-TS packet, or generated PCR packet in accordance with the signal from the multiplexing controller 61.

When the bit rate of packets output from the packet filter 104 is lower than the bit rate at a predetermined layer of the broadcast TS, packets stored in the data buffer 107 may be exhausted in some case. Therefore, the multiplexer 111 outputs a Null packet when there is no packet stored in the data buffer 107, and the multiplexer 111 receives a signal for selecting an MPEG-TS packet.

When the multiplexer 111 selects a packet other than the delayed broadcast TS packet (including the Null packet other than the PAT packet, NIT packet, PCR packet, and MPEG-TS packet) in accordance with the signal from the multiplexing controller 61, more specifically, the multiplexer 111 selects a packet other than the delayed broadcast TS packet from the first to 188th bytes of one packet, and selects the delayed broadcast TS packet from the 189th to 204th bytes. In other words, the apparatus of the present invention modifies (or rewrites) only the first to 188th bytes of the broadcast TS packet and utilizes the 189th to 204th bytes (including the layer information) of the broadcast TS packet as they are, even when the broadcast TS packet is modified.

It should be understood that the present invention is not limited to the illustrative embodiment described above, and those skilled in the art can readily modify the illustrative embodiment described above without departing from the claims.

## Claims

1. An apparatus comprising:

   means (31, 43) for receiving a broadcast TS (transport stream) and detecting layer information in each broadcast TS packet;
   means (32, 51) for delaying the broadcast TS;
   means (37, 104) for inputting an MPEG-TS for rewriting;
   means (33, 61) for generating a signal for selecting a delayed broadcast TS when the layer information does not indicate a predetermined layer, and generating a signal for selecting an MPEG-TS packet for rewriting when the layer information indicates the predetermined layer; and
   means (38, 111) for selectively outputting the delayed broadcast TS packet and the MPEG-TS packet for rewriting.

2. An apparatus according to claim 1, further comprising:

   means (102) for retrieving a PID and a ServiceID of a PMT packet of the MPEG-TS for rewriting;

means (34, 71, 72) for detecting a PAT packet of the broadcast TS, and modifying a PID and a ServiceID of a PMT packet described in the PAT packet and belonging to the predetermined layer to the PID and ServiceID of the PMT packet of the MPEG-TS for rewriting; and

means (35, 81, 82) for detecting an NIT packet of the broadcast TS, and modifying a ServiceID of a PMT packet described in the NIT packet and belonging to the predetermined layer to the serviceID of the PMT packet of the MPEG-TS for rewriting,

wherein said means (33, 61) for generating a signal for selecting a broadcast TS packet or an MPEG-TS packet for rewriting further generates a signal for selecting a modified PAT packet when a PAT packet of the broadcast TS is detected, and generates a signal for selecting a modified NIT packet when an NIT packet of the broadcast TS is detected, and

said means (38, 111) for selectively outputting a broadcast TS packet or a TS packet for rewriting further selectively outputs the modified PAT packet and the modified NIT packet.

3. An apparatus according to claim 2, wherein:

said means (102) for retrieving a PID and a ServiceID of a PMT packet further retrieves a PID of a program described in an ES loop of the PMT packet, and further comprises:

means (104) for passing therethrough an MPEG-TS packet which has the PID of the program described in the ES loop of the PMT packet; and

means (103, 105, 106) for detecting a PCR packet of the MPEG-TS for rewriting, retrieving a PCR value of the PCR packet, generating a new PCR value from the retrieved PCR value, and generating a new PCR packet,

said means (33, 61) for generating a signal for selecting the broadcast TS packet, MPEG-TS packet for rewriting, modified PAT packet, or modified NIT packet is further operative when a new PCR packet is generated to generate a signal for selecting the generated PCR packet, and

said means (38, 111) for selectively outputting the broadcast TS packet, TS packet for rewriting, modified PAT packet, or modified NIT packet further selectively outputs the generated PCR packet.

4. An apparatus according to claim 3, wherein:

said means (31, 43) for detecting layer information in each broadcast TS packet further retrieves or generates a TSP counter value of each broadcast TS packet, and

said means (103, 105, 106) for generating a new PCR packet generates a new PCR packet when the retrieved or generated TSP counter value matches a predetermined TSP counter value.

5. An apparatus according to claim 3, wherein:

said means (103, 105, 106) for generating a new PCR packet generates a new PCR packet upon detection of a PCR packet of an MPEG-TS for rewriting.

6. An apparatus according to claim 1, wherein:

said means (38, 111) for selectively outputting the broadcast TS packet or the MPEG-TS packet for rewriting outputs part of the MPEG-TS packet for rewriting from the first to 188th bytes and immediately thereafter outputs part of the broadcast TS packet from the 189th to 204th bytes when the broadcast TS packet is output, and outputs the broadcast TS packet from the first to 204 bytes when the broadcast TS packet is output.

7. An apparatus according to claim 2, wherein:

said means (38, 111) for selectively outputting the broadcast TS packet, TS packet for rewriting, modified PAT packet, or modified NIT packet outputs part of the modified PAT packet from the first to 188th bytes and immediately thereafter outputs part of the broadcast TS packet from 189th to 204th bytes when the modified PAT packet is output, and outputs part of the modified NIT packet from the first to 188th bytes and immediately thereafter outputs the part of the broadcast TS packet from 189th to 204th bytes when the modified NIT packet is output.

8. An apparatus according to claim 3, wherein:

said means (38, 111) for selectively outputting the broadcast TS packet, TS packet for rewriting, modified PAT packet, modified NIT packet, or generated PCR packet is operative when the generated PCR packet is output to output part of the generated PCR packet from the first to 188th bytes and immediately thereafter outputs part of the broadcast TS packet from 189th to 204th bytes.

## Fig. 1

TS1 (VIDEO1,AUDIO1,DATA1,NULL,PSI1,SI1,etc.)

TS2 (VIDEO2,AUDIO2,DATA2,NULL,PSI2,SI2,etc.)

```
┌──────────────┐     ┌──────────────┐
│      TS      │     │      TS      │
│  GENERATOR   │     │  GENERATOR   │
│    11-1      │     │    11-2      │
└──────────────┘     └──────────────┘
```

```
┌──────────────────────────┐
│      TS MULTIPLEXER       │
│            12            │
└──────────────────────────┘
```

MULTIPLEXED TS

    (VIDEO1,AUDIO1,DATA1,
       VIDEO2,AUDIO2,DATA2,NULL,PSI3,SI3,etc.)

```
┌──────────────────────────┐
│       BROADCAST          │
│     TS CONVERTER         │
│           13            │
└──────────────────────────┘
```

BROADCAST TS

    VIDEO1,AUDIO1,DATA1,
    VIDEO2,AUDIO2,DATA2,NULL,PSI3,SI3,IIP,etc.)

```
┌──────────────────────────┐
│       MODULATOR          │
│           14            │
└──────────────────────────┘
```

```
┌──────────────────────────┐
│      UP-CONVERTER        │
│           15            │
└──────────────────────────┘
```

10

EP 1 921 777 A1

## Fig. 2

BROADCAST TS (VIDEO1,AUDIO1,DATA1,
VIDEO2,AUDIO2,DATA2,NULL,PSI3,SI3,IIP,etc.)　　　TS3 (VIDEO3,AUDIO3,DATA3,NULL,PSI4,SI4,etc.)

```
┌─────────────────────┐
│   TS MULTIPLEXER    │
│                     │
│         12          │
└─────────────────────┘
```

MULTIPLEXED TS (VIDEO1,AUDIO1,DATA1,
VIDEO3,AUDIO3,DATA3,NULL,PSI5,SI5,etc.)

```
┌─────────────────────┐
│     BROADCAST       │
│    TS CONVERTER     │
│         13          │
└─────────────────────┘
```

BROADCAST TS (VIDEO1,AUDIO1,DATA1,
VIDEO3,AUDIO3,DATA3,NULL,PSI5,SI5,IIP,etc.)

*Fig. 3*

EP 1 921 777 A1

## Fig. 4

BROADCAST TS → TO DELAY BUFFER 51

IIP DETECTOR 41

LAYER INFORMATION DETECTOR 43 → TO MULTIPLEXING CONTROLLER 61

IIP

IIP ANALYZER 42 → TO MULTIPLEXING CONTROLLER 61

→ TO PCR PACKET GENERATOR 106

## Fig. 5

BROADCAST TS → DELAY BUFFER 51 → BROADCAST TS → TO DELAY BUFFER 91

TO PAT DETECTOR 71

TO NIT DETECTOR 81

## Fig. 6

FROM PAT EDITOR 72

TO PAT EDITOR 72

TO NIT EDITOR 82

FROM LAYER INFORMATION DETECTOR 43 ———→ | MULTIPLEXING CONTROLLER | ←——— FROM PAT DETECTOR 71

FROM IIP ANALYZER 42 ———→ | 61 | ←——— FROM NIT DETECTOR 81

←——— FROM PCR PACKET GENERATOR 106

———→ TO PCR PACKET GENERATOR 106

TO MULTIPLEXER 74

TO MULTIPLEXER 84

TO MULTIPLEXER 111

EP 1 921 777 A1

## Fig. 7

FROM MULTIPLEXING CONTROLLER 61

FROM DELAY BUFFER 51

TO MULTIPLEXING CONTROLLER 61

BROADCAST TS

| 71 PAT DETECTOR | PAT → | 72 PAT EDITOR | → | MULTI-PLEXER 74 | PAT' → | TO MULTIPLEXER 111 |

| 73 CRC GENERATOR |

| 75 PAT BUFFER | PAT' → TO MULTIPLEXER 111 |

PAT' → TO MULTIPLEXER 111

TO MULTIPLEXING CONTROLLER 61

FROM PAT DETECTOR 101

FROM MULTIPLEXING CONTROLLER 61

EP 1 921 777 A1

## Fig. 8

FROM DELAY BUFFER 51     FROM MULTIPLEXING CONTROLLER 61

BROADCAST TS

81
NIT
DETECTOR

NIT

82
NIT
EDITOR

84
MULTI-
PLEXER

NIT'     TO MULTIPLEXER 111

83
CRC
GENERATOR

NIT'     85
NIT
BUFFER

NIT'     TO MULTIPLEXER 111

TO MULTIPLEXING CONTROLLER 61

FROM PAT DETECTOR 101

FROM MULTIPLEXING CONTROLLER 61

Fig. 9

FROM DELAY BUFFER 51 → BROADCAST TS → [91 DELAY BUFFER] → BROADCAST TS → TO MULTIPLEXER 111

*Fig. 10*

TS' FOR REWRITING

| 104 PACKET FILTER |

TS' FOR REWRITING

| 107 DATA BUFFER |

TS' FOR REWRITING

TO MULTIPLEXER 111

| 101 PAT DETECTOR | | 102 PMT DETECTOR | | 103 PCR DETECTOR |

| 105 PCR VALUE GENERATOR |

| 106 PCR PACKET GENERATOR |

PCR'

TO MULTIPLEXER 111

FROM MULTIPLEXING CONTROLLER 61

FROM IIP ANALYZER 42

TO PAT EDITOR 72

TO MULTIPLEXING CONTROLLER 61

TO NIT EDITOR 82

EP 1 921 777 A1

## Fig. 11

FROM DELAY BUFFER 91 → [ BROADCAST TS ] →

FROM MULTIPLEXER 74 → [ PAT' ] →

FROM PAT BUFFER 75 → [ PAT' ] →

FROM MULTIPLEXER 84 → [ NIT' ] →

FROM NIT BUFFER 85 → [ NIT' ] →

FROM DATA BUFFER 107 → [ TS' FOR REWRITING ] →

FROM PCR GENERATOR 106 → [ PCR' ] →

111 MULTIPLEXER → BROADCAST TS' →

FROM MULTIPLEXING CONTROLLER 61 →

EP 1 921 777 A1

## Fig. 12

**Frame structure:**

| HEADER | PAYLOAD | ISDBT INFORMATION | PARITY |
|--------|---------|-------------------|--------|

NUMBER OF BYTE: 4 / 184 / 8 / 8

122 — header fields: SYNC BYTE (0x47), PID(12-8), PID(7-0), CONTINUOUS COUNTER
120 — h1, h2, h3 / h4, h5
124 — ISDBT fields: d1, r, d2, d3, d4, d5, d6 / TRANSMISSION PARAMETER SWITCHING INDEX / LAYER INFORMATION, d7, d8 / TSP COUNTER (12-8), TSP COUNTER (7-0) / AC DATA
123
121

h1: TRANSPORT ERROR INDICATOR
h2: PAYLOAD UNIT START INDICATOR
h3: TRANSPORT PRIORITY
h4: TRANSPORT SCRAMBLE CONTROL
h5: ADAPTATION FIELD CONTROL

d1: TMCC IDENTIFIER
d2: BUFFER RESET FLAG
d3: START CONTROL FOR URGENT BROADCASTING
d4: CHANGE INSTRUCTION
d5: FRAME START FLAG
d6: FRAME SYNCHRONIZATION IDENTIFIER
d7: AC DATA FLAG
d8: NUMBER OF AC DATA BYTES
r: RESERVED

EP 1 921 777 A1

## Fig.13

**PAT**

| table_id (7-0) <0x00> | | | |
|---|---|---|---|

| a1 | '0' | rsvd | section_length (11-8) |
|---|---|---|---|

← 130

| section_length (7-0) |
|---|

| transport_stream_id (15-0) |
|---|

| rsvd | version_number(4-0) | a2 |
|---|---|---|

| section_number (7-0) |
|---|

| last_section_number (7-0) |
|---|

program_loop

| program_number (15-0) <0x0000> |
|---|

| rsvd | network_PID (12-8) |
|---|---|

| network_PID (7-0) |
|---|

| program_number (15-0) ( = service_id ) |
|---|

← 133

| rsvd | program_map_PID (12-8) |
|---|---|

← 134

| program_map_PID (7-0) |
|---|

| program_number (15-0) ( = service_id ) |
|---|

← 131

| rsvd | program_map_PID (12-8) |
|---|---|

← 132

| program_map_PID (7-0) |
|---|

| CRC32 (31-0) |
|---|

rsvd : reserved
a1 : section_syntax_indicator
a2 : current_next_indicator

## Fig.14

NIT

| table_id (7-0) <0x40> | | | |
|---|---|---|---|
| n1 | n2 | rsvd | section_length (11-8) |

◄ ──── 140

| section_length (7-0) |
|---|

◄

| network_id(15-0) | | |
|---|---|---|
| rsvd | version_number(4-0) | n3 |
| section_number (7-0) | | |
| last_section_number (7-0) | | |
| rsvd | network_descriptor_length (11-8) | |
| network_descriptor_length (7-0) | | |

| 1st_descriptor (    Network_name_descriptor ( ) <br>      system_management_descriptor ( )    ) |
|---|

| rsvd | transport_stream_loop_length (11-8) |
|---|---|
| transport_stream_loop_length (7-0) | |

| transport_stream_id (15-0) |
|---|

| original_network_id (15-0) |
|---|

| rsvd | transport_descriptor_length (11-8) |
|---|---|
| transport_descriptor_length (7-0) | |

| 2nd_descriptor (    service_list_descriptor ( ) <br>      terrestrial_delivery_system_descriptor ( ) <br>      partial_reception_descriptor ( ) <br>      ts_information_descriptor ( )    ) |
|---|

◄ ──── 141

| CRC32 (31-0) |
|---|

rsvd : reserved
n1 : section_syntax_indicator
n2 : reserved_future_used
n3 : current_next_indicator

**INTERNATIONAL SEARCH REPORT**

| International application No. |
| --- |
| PCT/JP2006/316823 |

A. CLASSIFICATION OF SUBJECT MATTER
*H04H1/00(2006.01)i, H04N7/173(2006.01)i, H04N17/04(2006.01)i*

According to International Patent Classification (IPC) or to both national classification and IPC

B. FIELDS SEARCHED

Minimum documentation searched (classification system followed by classification symbols)
H04H1/00, H04N7/173, H04N17/04

Documentation searched other than minimum documentation to the extent that such documents are included in the fields searched
Jitsuyo Shinan Koho     1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2002-51017 A (Nippon Hoso Kyokai),<br>15 February, 2002 (15.02.02),<br>Par. Nos. [0031] to [0033]; Fig. 4<br>(Family: none) | 1<br>2-8 |
| A | JP 2001-274856 A (Hitachi, Ltd.),<br>05 October, 2001 (05.10.01),<br>Par. Nos. [0015] to [0016]; Fig. 4<br>(Family: none) | 1-8 |
| A | JP 2003-115807 A (NEC Corp.),<br>18 April, 2003 (18.04.03),<br>Par. No. [0040]; Fig. 1<br>(Family: none) | 1-8 |

| ☒ Further documents are listed in the continuation of Box C. | ☐ See patent family annex. |
| --- | --- |

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>    13 September, 2006 (13.09.06) | Date of mailing of the international search report<br>    19 September, 2006 (19.09.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/316823 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-112573 A (Sony Corp.), 23 April, 1999 (23.04.99), Abstract; Par. Nos. [0018], [0047] (Family: none) | 1-8 |
| A | JP 11-239175 A (Matsushita Electric Industrial Co., Ltd.), 31 August, 1999 (31.08.99), Abstracts (Family: none) | 1-8 |
| A | JP 2003-174622 A (Matsushita Electric Industrial Co., Ltd.), 20 June, 2003 (20.06.03), Par. Nos. [0092] to [0098] & EP 1457990 A1 Par. Nos. [0169] to [0175] & WO 2003/044796 A1 & US 2005/0013583 A1 & CN 1589475 A & KR 2005-44351 A | 1-8 |
| A | JP 2001-119376 A (NEC Corp.), 27 April, 2001 (27.04.01), Par. Nos. [0028], [0039] (Family: none) | 1-8 |
| A | JP 2003-333551 A (Nippon Telegraph And Telephone Corp.), 21 November, 2003 (21.11.03), Abstracts (Family: none) | 1-8 |
| A | JP 9-284761 A (Sony Corp.), 31 October, 1997 (31.10.97), Abstracts (Family: none) | 1-8 |
| A | WO 2002/082699 A1 (Matsushita Electric Industrial Co., Ltd.), 17 October, 2002 (17.10.02), Description; page 17, line 7 to page 20, line 23 & EP 1376913 A1 Par. Nos. [0089] to [0110] & US 2004/0125761 A1 & CN 1463512 A & KR 2004-14132 A | 1-8 |
| A | JP 2004-112316 A (Toshiba Corp.), 08 April, 2004 (08.04.04), Fig. 4 (Family: none) | 1-8 |

Form PCT/ISA/210 (continuation of second sheet) (April 2005)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *SP-5002, www.astrode-sign.co.jp/shop/goods/goods.asp?goods=000000 0000112*

- *Report on Exhibition, www.leader/co.jp/exhibi-tion/re041203_1.html*